# EUROPÄISCHE PATENTANMELDUNG

(11) **EP 4 378 674 A1**
(43) Veröffentlichungstag der Anmeldung: **05.06.2024**
(21) Anmeldenummer: 23213081.5
(22) Anmeldetag: 29.11.2023
(51) Int. Cl.: B29D 11/00, B29C 45/16, B29L 11/00, B29K 233/04, B29K 69/00

(54) **ZWEI TEILLINSEN AUFWEISENDE PROJEKTIONSLINSE FÜR EINEN KRAFTFAHRZEUGSCHEINWERFER UND VERFAHREN ZUR HERSTELLUNG EINER SOLCHEN PROJEKTIONSLINSE**

(30) Priorität: 02.12.2022 DE 102022131950
(71) Anmelder: Marelli Automotive Lighting Reutlingen (Germany) GmbH, 72762 Reutlingen (DE)
(72) Erfinder: Breitenbach, Uwe, 72654 Neckartenzlingen (DE); Lacour, Thomas, 72072 Tübingen (DE)
(74) Vertreter: DREISS Patentanwälte PartG mbB

(57) **Zusammenfassung**

Vorgestellt wird ein Verfahren zur Herstellung einer eine erste Teillinse und eine zweite Teillinse aufweisenden Projektionslinse für einen Kraftfahrzeugscheinwerfer, wobei eine erste Teillinse erzeugt wird, die aus einem eine erste Materialzusammensetzung aufweisenden ersten Material besteht und wobei danach eine zweite Teillinse erzeugt wird, die aus einem eine zweite Materialzusammensetzung aufweisenden zweiten Material besteht, wobei die zweite Teillinse an die erste Teillinse angespritzt wird. Die Projektionslinse zeichnet sich dadurch aus, dass das erste Material eine höhere Temperaturbeständigkeit aufweist als das zweite Material.

## Beschreibung

### Stand der Technik

Die vorliegende Erfindung betrifft ein Verfahren zur Herstellung einer eine erste Teillinse und eine zweite Teillinse aufweisenden Projektionslinse für einen Kraftfahrzeugscheinwerfer und eine solche Projektionslinse.

### Offenbarung der Erfindung

Ein solches Verfahren und eine solche Projektionslinse sind aus der EP 2 402 140 B1 bekannt.

Die bekannte Projektionslinse ist zum Beispiel ein achromatisches Linsensystem. Achromatische Linsensysteme werden auch aus separaten Teillinsen hergestellt, die optional miteinander verkittet werden. Üblicherweise werden bei Achromaten unterschiedliche Materialien für die Teillinsen eingesetzt, um unterschiedliche Dispersionseigenschaften der Teillinsen zu kompensieren. Die vorliegende Erfindung basiert, wie bereits die EP 2 402 140 B1, auf der Idee, eine zwei Teillinsen aufweisende Projektionslinse direkt im Spritzgussverfahren herzustellen. Die resultierende Projektionslinse weist keinen Spalt zwischen ihren Teillinsen auf und kann direkt in das zugehörige Lichtmodul eines Kraftfahrzeugscheinwerfers eingebaut werden. Eine Verkittung der Teillinsen entfällt. Durch die Spaltfreiheit wird das optische System des Lichtmoduls effizienter, da mit einem Spalt einhergehende und Verluste verursachende Grenzflächen entfallen. Zusätzlich werden Bauteile und ein Montageaufwand für das Haltern der zweiten Teillinse eingespart. Der benötigte Bauraum wird vorteilhafterweise verkleinert.

Bei den aus der EP 2 304 140 B1 bekannten Gegenständen wird eine erste Teillinse erzeugt, die aus einem eine erste Materialzusammensetzung aufweisenden ersten Material besteht, und danach wird eine zweite Teillinse erzeugt, die aus einem eine zweite Materialzusammensetzung aufweisenden zweiten Material besteht. Dabei wird die zweite Teillinse an die erste Teillinse angespritzt.

Die Aufgabe der Erfindung besteht in der Angabe eines verbesserten Verfahrens und einer verbesserten Projektionslinse. Diese Aufgabe wird bezüglich des Verfahrens mit der Summe der Merkmale des unabhängigen Verfahrensanspruchs und bezüglich der Projektionslinse mit der Summe der Merkmale des unabhängigen Vorrichtungsanspruchs gelöst.

Diese Ansprüche unterscheiden sich von dem eingangs genannten Stand der Technik jeweils dadurch, dass das erste Material eine höhere Temperaturbeständigkeit aufweist als das zweite Material. Als Folge wird ein Ineinanderschmelzen beider Teillinsen bei der Herstellung der Projektionslinse vermieden.

Eine bevorzugte Ausgestaltung des Verfahrens zeichnet sich dadurch aus, dass das erste Material einen ersten wellenlängenabhängigen Brechungsindex aufweist und das zweite Material einen zweiten wellenlängenabhängigen Brechungsindex aufweist, wobei sich der zweite wellenlängenabhängige Brechungsindex von dem ersten wellenlängenabhängigen Brechungsindex unterscheidet. Die Verwendung solcher Materialien erlaubt eine Realisierung von erwünschten achromatischen Eigenschaften.

Bevorzugt ist auch, dass das erste Material Polycarbonat, d.h. PC, ist. Weiter ist bevorzugt, dass das zweite Material Polymethylmethacrylat, d.h. PMMA ist. Diese transparenten Kunststoffe sind im Scheinwerferbereich gebräuchliche Kunststoffe.

Eine weitere bevorzugte Ausgestaltung zeichnet sich dadurch aus, dass die erste Teillinse eine Sammellinse und die zweite Teillinse eine Zerstreuungslinse ist. Diese Kombination erlaubt in Verbindung mit den unterschiedlichen wellenlängenabhängigen Brechungsindizes eine Realisierung erwünschter achromatischer Eigenschaften.

In Bezug auf Ausgestaltungen der Projektionslinse ist bevorzugt, dass das erste Material einen ersten wellenlängenabhängigen Brechungsindex aufweist und das zweite Material einen zweiten wellenlängenabhängigen Brechungsindex aufweist, wobei sich der zweite wellenlängenabhängige Brechungsindex von dem ersten wellenlängenabhängigen Brechungsindex unterscheidet.

Weiter ist in Bezug auf Ausgestaltungen der Projektionslinse bevorzugt, dass das erste Material Polycarbonat ist.

Weiter ist in Bezug auf Ausgestaltungen der Projektionslinse bevorzugt, dass das zweite Material Polymethylmethacrylat ist.

Weiter ist in Bezug auf Ausgestaltungen der Projektionslinse bevorzugt, dass die erste Teillinse eine Sammellinse und die zweite Teillinse eine Zerstreuungslinse ist.

Für diese Ausgestaltungen der Projektionslinse ergeben sich zu den analogen Verfahrensansprüchen korrespondierende Vorteile.

Sowohl für die Verfahrensansprüche als auch für die dazu jeweils analogen, auf eine Projektionslinse gerichteten Ansprüche gilt, dass die Wellenlängenabhängigkeit der Brechungsindizes zusammen mit den Brennweiten der Einzellinsen für die Farbkorrektur verantwortlich sind. Dies kommt durch die Achromasiebedingung v(1)x f(1)+v(2)x f(2)=0 zum Ausdruck, wobei die v(i) die Abbeschen Zahlen und die f(i) die Brennweiten der Einzellinsen sind und wobei die Nummern 1 und 2 die Linsen des Achromaten nummerieren. Die Abbe Zahl ist ein dimensionsloses Maß für die Wellenlängenabhängigkeit des Brechungsindex im sichtbaren Spektralbereich. Optische Materialien haben eine positive Wellenlängenabhängigkeit des Brechungsindexes. Um die Achromasiebedingung zu erfüllen, wird bevorzugt eine Linse mit negativer Brennweite verwendet. Bevorzugt ist auch, dass für die in der Achromasiebedingung auftretende Summe ein betragsmäßig kleiner Wert angestrebt wird.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Figur 1: ein Ausführungsbeispiel einer erfindungsgemäßen Projektionslinse in perspektivischer Darstellung;
- Figur 2: einen Schnitt durch ein Ausführungsbeispiel einer erfindungsgemäßen Projektionslinse; und
- Figur 3: ein Flussdiagramm eines erfindungsgemäßen Verfahrens zur Herstellung einer solchen Projektionslinse.

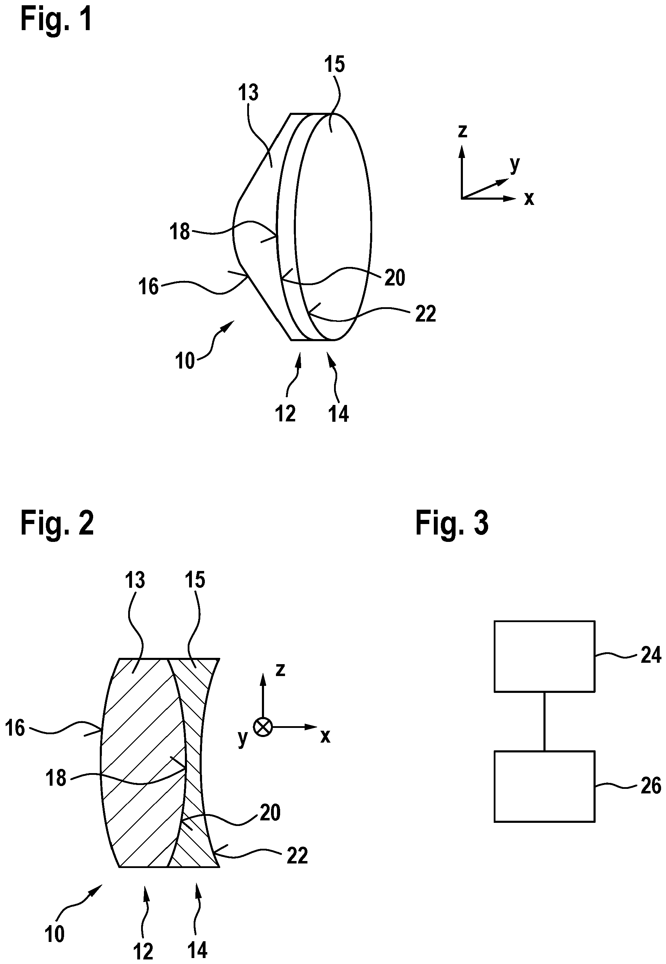

Die Figuren 1 und 2 zeigen im Einzelnen eine Projektionslinse 10 für einen Kraftfahrzeugscheinwerfer, die eine erste Teillinse 12 und eine zweite Teillinse 14 aufweist. Die erste Teillinse 12 besteht aus einem eine erste Materialzusammensetzung aufweisenden ersten Material 13, und die zweite Teillinse besteht aus einem eine zweite Materialzusammensetzung aufweisenden zweiten Material 15. Die beiden Teillinsen 12, 14 sind mit ihren lichtbrechenden Grenzflächen in Reihe hintereinander angeordnet.

Die erste Teillinse 12 weist eine erste Lichteintrittsfläche 16 und eine erste Lichtaustrittsfläche 18 auf. Die erste Lichteintrittsfläche 16 bildet die Lichteintrittsfläche der Hintereinanderanordnung der beiden Teillinsen 12, 14. Die erste Lichteintrittsfläche 16 ist konvex gekrümmt. Die erste Lichtaustrittsfläche 18 ist eben oder ebenfalls konvex gekrümmt. Mit dieser Geometrie bildet die erste Teillinse 12 eine Sammellinse.

Die zweite Teillinse 14 weist eine zweite Lichteintrittsfläche 20 und eine zweite Lichtaustrittsfläche 22 auf. Die zweite Lichtaustrittsfläche 22 bildet die Lichtaustrittsfläche der Hintereinanderanordnung der beiden Teillinsen 12, 14. Die zweite Lichteintrittsfläche 20 ist konkav gekrümmt. Die zweite Lichtaustrittsfläche 20 ist eben oder ebenfalls konkav gekrümmt. Mit dieser Geometrie bildet die zweite Teillinse 14 eine Zerstreuungslinse. In der Regel sind bei einem Achromaten an der Grenzfläche der Linsen die Radien der Sphären, die die erste Lichtaustrittsfläche 18 beschreiben bzw. annähern, am größten. Der Radius der Lichteintrittsfläche 20 der Zerstreuungslinse 14 ist gleich dem Radius der ersten Lichtaustrittsfläche Fläche 18, um einen bezüglich ihrer Funktion sonst auftretenden Zerfall in zwei Einzellinsen zu vermeiden.

Die zweite Teillinse 14 haftet mit der zweiten Lichteintrittsfläche 20 an der ersten Lichtaustrittsfläche 18 der ersten Teillinse 12 stoffschlüssig an. Unter einem stoffschlüssigen Anhaften wird dabei verstanden, dass sich die beiden Materialien der beiden Teillinsen 12, 14 flächig und unmittelbar aneinander anhaftend berühren, ohne das zwischen der ersten Lichtaustrittsfläche 18 und der zweiten Lichteintrittsfläche 20 ein Spalt oder ein drittes Material existiert. Das erste Material 13 weist eine höhere Temperaturbeständigkeit auf als das zweite Material 15. Unter der Temperaturbeständigkeit wird hier insbesondere eine temperaturabhängige Formbeständigkeit verstanden. Ein erstes Material 13, das erst bei höheren Schmelztemperaturen schmilzt als ein zweites Material 15, weist in diesem Sinne eine höhere Temperaturbeständigkeit auf als das zweite Material 15.

Das erste Material 13 weist einen ersten wellenlängenabhängigen Brechungsindex auf, und das zweite Material 15 weist einen zweiten wellenlängenabhängigen Brechungsindex auf, wobei sich der zweite wellenlängenabhängige Brechungsindex von dem ersten wellenlängenabhängigen Brechungsindex unterscheidet. Diese Bedingung wird zum Beispiel durch eine Materialpaarung erfüllt, bei der das erste Material 13 Polycarbonat und das zweite Material 15 Polymethylmethacrylat ist. Mit diesen Eigenschaften bildet die Projektionslinse 10 einen Achromaten, der für einen hauptsächlich in x-Richtung und quer zu der y-Richtung und quer zu der z-Richtung des abgebildeten kartesischen Koordinatensystems erfolgenden Lichtdurchtritt ausgelegt ist. Die Abmessungen der Projektionslinse quer zur x-Richtung liegt bevorzugt zwischen 50 mm und 100 mm. Die Projektionslinse, bzw. der bei bestimmungsgemäßer Verwendung der Projektionslinse von Licht des Kraftfahrzeugscheinwerfers durchstrahlte Bereich der Projektionslinse, weist bevorzugt eine Rotationssymmetrie bzgl. der Hauptabstrahlrichtung x auf.

Figur 3 zeigt ein Flussdiagramm eines Verfahrens zur Herstellung einer eine erste Teillinse 12 und eine zweite Teillinse 14 aufweisenden Projektionslinse 10 für einen Kraftfahrzeugscheinwerfer.

In einem ersten Schritt 24 wird die erste Teillinse 12 durch einen Spritzgussschritt erzeugt. Die erste Teillinse 12 besteht aus einem eine erste Materialzusammensetzung aufweisenden ersten Material 13.

In einem zweiten Schritt 26 wird danach eine zweite Teillinse 14 erzeugt. Die zweite Teillinse 14 besteht aus einem eine zweite Materialzusammensetzung aufweisenden zweiten Material 15. Dabei wird die zweite Teillinse 14 an die erste Teillinse 12 angespritzt.

Das erste Material 13 weist eine höhere Temperaturbeständigkeit auf als das zweite Material 15.

Außerdem weist das erste Material 13 einen ersten wellenlängenabhängigen Brechungsindex auf, und das zweite Material 15 weist einen zweiten wellenlängenabhängigen Brechungsindex auf, wobei sich der zweite wellenlängenabhängige Brechungsindex von dem ersten wellenlängenabhängigen Brechungsindex unterscheidet. Der wellenlängenabhängige Brechungsindex des ersten Materials ist bevorzugt größer als der wellenlängenabhängige Brechungsindex des zweiten Materials. Das erste Material 13 ist in dem Ausführungsbeispiel Polycarbonat, während das zweite Material 15 Polymethylmethacrylat ist.

Die Grenzfläche zwischen den beiden Materialien 13, 15 muss eine hohe Qualität aufweisen. Die Qualität muss so hoch sein, dass sie auch als optische Qualität bezeichnet werden kann. Eine hohe optische Qualität zeichnet sich insbesondere durch ihre hohe Glattheit aus. Der beim Spritzgießen verwendete Werkzeugeinsatz muss jeweils als Negativ der ersten zu spritzenden Teillinse 12 die entsprechende Oberflächengüte und Formtoleranz aufweisen.

Die erste Teillinse 12 ist eine Sammellinse. Ihre lichtbrechenden Flächen 16, 18 sind bevorzugt beide konvex. Die zweite Teillinse 14 ist eine Zerstreuungslinse. Ihre lichtbrechenden Flächen 20, 22 sind bevorzugt beide konkav. Eine der konkaven Flächen liegt an einer der konvexen Flächen an. Die Krümmungen der beiden letztgenannten Flächen 18, 20 sind betragsmäßig gleich, wobei die Vorzeichen der Krümmung der einen Fläche 18 dem Vorzeichen der anderen Fläche 20 entgegengesetzt sind.

## Patentansprüche

1. Verfahren zur Herstellung einer eine erste Teillinse (12) und eine zweite Teillinse (14) aufweisenden Projektionslinse (10) für einen Kraftfahrzeugscheinwerfer, wobei eine erste Teillinse (12) erzeugt wird, die aus einem eine erste Materialzusammensetzung aufweisenden ersten Material (13) besteht und wobei danach eine zweite Teillinse (14) erzeugt wird, die aus einem eine zweite Materialzusammensetzung aufweisenden zweiten Material (15) besteht, wobei die zweite Teillinse (14) an die erste Teillinse (12) angespritzt wird, **dadurch gekennzeichnet, dass** das erste Material (13) eine höhere Temperaturbeständigkeit aufweist als das zweite Material (15).

2. Verfahren nach Anspruch 1, **dadurch gekennzeichnet, dass** das erste Material (13) einen ersten wellenlängenabhängigen Brechungsindex aufweist und das zweite Material (15) einen zweiten wellenlängenabhängigen Brechungsindex aufweist, wobei sich der zweite wellenlängenabhängige Brechungsindex von dem ersten wellenlängenabhängigen Brechungsindex unterscheidet.

3. Verfahren nach einem der vorhergehenden Ansprüche, **dadurch gekennzeichnet, dass** das erste Material (13) Polycarbonat ist.

4. Verfahren nach einem der vorhergehenden Ansprüche, **dadurch gekennzeichnet, dass** das zweite Material (15) Polymethylmethacrylat ist.

5. Verfahren nach einem der vorhergehenden Ansprüche, **dadurch gekennzeichnet, dass** die erste Teillinse (12) eine Sammellinse und die zweite Teillinse (14) eine Zerstreuungslinse ist.

6. Projektionslinse (10) für einen Kraftfahrzeugscheinwerfer, die eine erste Teillinse (12) und eine zweite Teillinse (14) aufweist, wobei die erste Teillinse (12) aus einem eine erste Materialzusammensetzung aufweisenden ersten Material (13) besteht und wobei die zweite Teillinse (14) aus einem eine zweite Materialzusammensetzung aufweisenden zweiten Material (15) besteht und wobei die zweite Teillinse (14) an der ersten Teillinse (12) stoffschlüssig anhaftet, **dadurch gekennzeichnet, dass** das erste Material (13) eine höhere Temperaturbeständigkeit aufweist als das zweite Material (15).

7. Projektionslinse (10) nach Anspruch 6, **dadurch gekennzeichnet, dass** das erste Material (13) einen ersten wellenlängenabhängigen Brechungsindex aufweist und das zweite Material (15) einen zweiten wellenlängenabhängigen Brechungsindex aufweist, wobei sich der zweite wellenlängenabhängige Brechungsindex von dem ersten wellenlängenabhängigen Brechungsindex unterscheidet.

8. Projektionslinse (10) nach einem der Ansprüche 6 bis 7, **dadurch gekennzeichnet, dass** das erste Material (13) Polycarbonat ist.

9. Projektionslinse (10) nach Anspruch 8, **dadurch gekennzeichnet, dass** das zweite Material (15) Polymethylmethacrylat ist.

10. Projektionslinse (10) nach einem der Ansprüche 6 bis 9, **dadurch gekennzeichnet, dass** die erste Teillinse (12) eine Sammellinse und die zweite Teillinse (14) eine Zerstreuungslinse ist.
